# EUROPEAN PATENT APPLICATION

(11) **EP 1 744 553 A1**
(43) Date of publication of application: **17.01.2007**
(21) Application number: 05720174.1
(22) Date of filing: 07.03.2005
(51) Int. Cl.: H04N 5/91, H04N 5/92, H04N 7/24

(54) **RECORDING/REPRODUCTION/EDITION DEVICE**

(30) Priority: 15.03.2004 JP 2004072866
(71) Applicant: SHARP KABUSHIKI KAISHA, Osaka-shi, Osaka 545-8522 (JP)
(72) Inventor: NAKAMURA, Yasuhiro c/o Maisonette Oyumino G1, Chiba-shi, Chiba 266-0031 (JP)
(74) Representative: Müller, Frithjof E.
(86) International application number: PCT/JP2005/003902
(87) International publication number: WO 2005/088964

(57) **Abstract**

A recording/replaying/editing device capable of randomly accessing moving picture data compressed by inter-frame coding even when only a low signal processing capability is available. The recording/replaying/editing device includes: an image data input unit for entering image data compressed by inter-frame prediction; a reference image frame sequence creation determination unit for determining whether or not a reference image frame sequence should be created, based on the number of I frames included in each file in the image data or the intervals at which I frame are inserted; and a reference image frame sequence creation unit for creating, if it is determined by the reference image frame sequence creation determination unit that a reference image frame sequence should be created, a reference image frame sequence consisting of I frames and additional image frames by adding image frames to I frames.

## Description

### TECHNICAL FIELD

The present invention relates to a recording/replaying/editing device for recording, replaying, and editing moving picture data compressed by inter-frame coding.

### BACKGROUND ART

Moving picture compression technologies such as MPEG and H.263 employ an inter-frame coding technique based on inter-frame prediction. The inter-frame coding technique employs a layer comprised of a plurality of image frames referred to as a GOP (Group of Pictures).

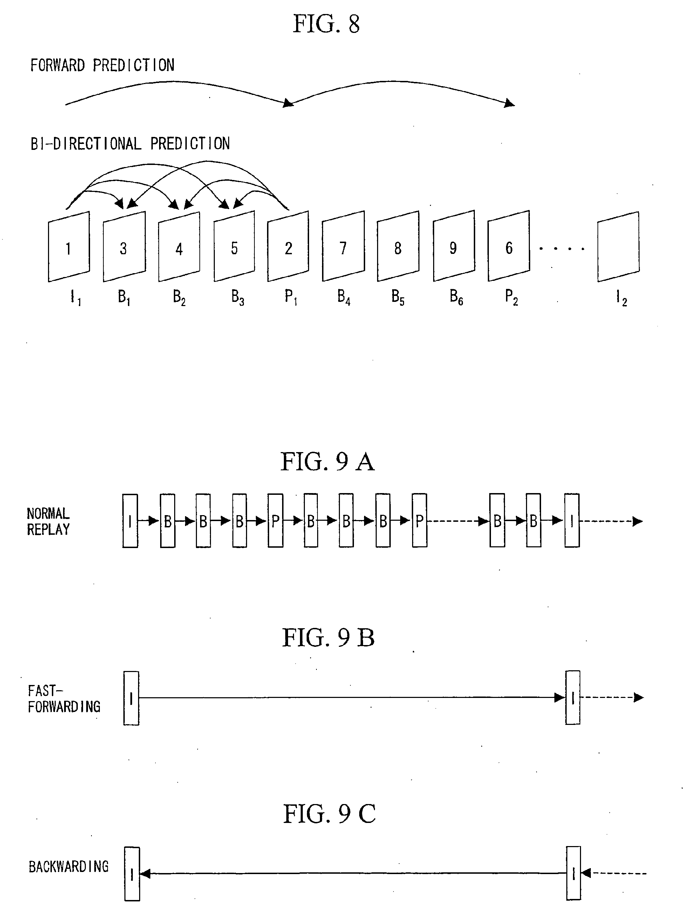

As shown in Fig. 8, a GOP is comprised of three kinds of frames, namely, intra coded frames (I frames) I1 and I2, forward prediction coded frames (P frame) P1 and P2, and bidirectional prediction coded frames (B frames) B1, B2, B3, B4, B5, and B6. The I frame employs intra frame coding instead of inter-frame coding. An I frame is always inserted at the head of each GOP. The P frame is obtained by encoding a difference found by performing an inter-frame prediction based on past frames. The B frame is obtained by encoding a difference found by performing an inter-frame prediction based on past and future frames.

As shown, the original image frames are assumed to be arranged in order of I1, B1, B2, B3, P1, B4, B5, and B6. On the encoding end, coding is performed in order of I1, P1, B1, B2, B3, and P2 as indicated by the numbers. On the decoding end, decoding is performed in the same order; and then the frames are re-arranged in the original order before they are replayed.

As shown in Fig. 9A, in normal replaying, all of the frames are decoded, re-arranged, and then replayed. When fast-forwarding, as shown in Fig. 9B, only I frames are decoded. When moving backward, as shown in Fig. 9C, only I frames are decoded. In both cases, however, decoding starts with an I frame near an access point. Namely, I frame is used as an access point (cue) for random accessing.

Patent Document 1: JP Patent Publication (Kokai) No. 2002-300526 A

### DISCLOSURE OF THE INVENTION

The I frame is in a still image mode in which intra frame coding is employed. It has poorer coding efficiency than other frames, and its volume of information is large. Therefore, although I frame is inserted at the head of each GOP without fail, it cannot be used frequently. If the intervals at which I frames are inserted are too long, no access point can be obtained between I frames for random accessing.

JP Patent Publication (Kokai) No. 2002-300526 entitled "Stream Editing Apparatus and Method" discloses an editing method that does not depend on the GOP unit. In an example disclosed in the publication, editing can be performed within a range smaller than the GOP unit. However, no particular consideration is given to the selection of editing points (edit start and end positions) because in high-performance equipment such as DVD replaying apparatuses, such editing points can be easily selected on frame unit basis. For example, when an editing point is selected by fast-forwarding or frame-advancing to the frame that the user wishes to designate, the processing speed is so fast that the user does not have to wait too long or there would be no delay in image display even if all of the frames are decoded.

However, in equipment with lower signal processing capabilities, such as portable terminals, there is the problem of delayed display when fast-forwarding if all of the frames are decoded, for example.

It is therefore an object of the invention to provide a recording/replaying/editing device that allows random-accessing of moving picture data compressed by inter-frame coding even if the signal processing performance is low.

The invention provides a recording/replaying/editing device comprising: an image data input unit for entering image data compressed by inter-frame prediction; a reference image frame sequence creation determination unit for determining whether or not a reference image frame sequence should be created, based on the number of I frames included in each file in the image data or the intervals at which I frames are inserted; and a reference image frame sequence creation unit for creating, if it is determined by the reference image frame sequence creation determination unit that a reference image frame sequence should be created, a reference image frame sequence consisting of I frames and additional image frames by adding image frames to I frames.

The invention is based on the premise that, when editing or performing a tricky operation, the user will necessarily carry out a fast-forwarding or a backwarding of the image data at least once. Thus, once image data is obtained, a reference image frame sequence is created and stored in the reference image frame sequence memory unit. When the user carries out the fast-forwarding or backwarding of the image data, the reference image frame sequence is displayed, thereby facilitating the designation of edit positions.

In accordance with the invention, there is no need to re-encode all of the frames even when the number of I frames in the file is small or when the intervals of insertion of I frames are large. As a result, processing load can be reduced, so that an editing task can be smoothly carried out on equipment having low processing performance, such as a portable terminal, for example.

### BRIEF DESCRIPTION OF THE DRAWINGS

Fig. 1 shows a block diagram of an example of a recording/replaying/editing device according to the invention.
Fig. 2 shows an example of a file format.
Fig. 3 shows a procedure for creating a reference image frame sequence according to the recording/replaying/editing device of the invention.
Fig. 4 shows a procedure for determining whether or not a reference image frame sequence should be created.
Fig. 5 shows a specific example of the process for creating a reference image frame sequence.
Fig. 6 shows an editing procedure according to the recording/replaying/editing device of the invention.
Fig. 7 shows specific examples of the edit process.
Fig. 8 shows the contents of a GOP.
Fig. 9 shows drawings for the explanation of normal replaying, fast-forwarding, and backwarding.

### EXPLANATION OF THE NUMERALS

1...image data input unit, 2...memory unit, 3...multiplex separation unit, 4...image compression/expansion unit, 5... management information processing unit, 6...reference image frame sequence creation determination unit, 7...reference image frame sequence creation unit, 8...reference image frame sequence memory unit, 9...image data buffer, 10... display unit

### BEST MODES FOR CARRYING OUT THE INVENTION

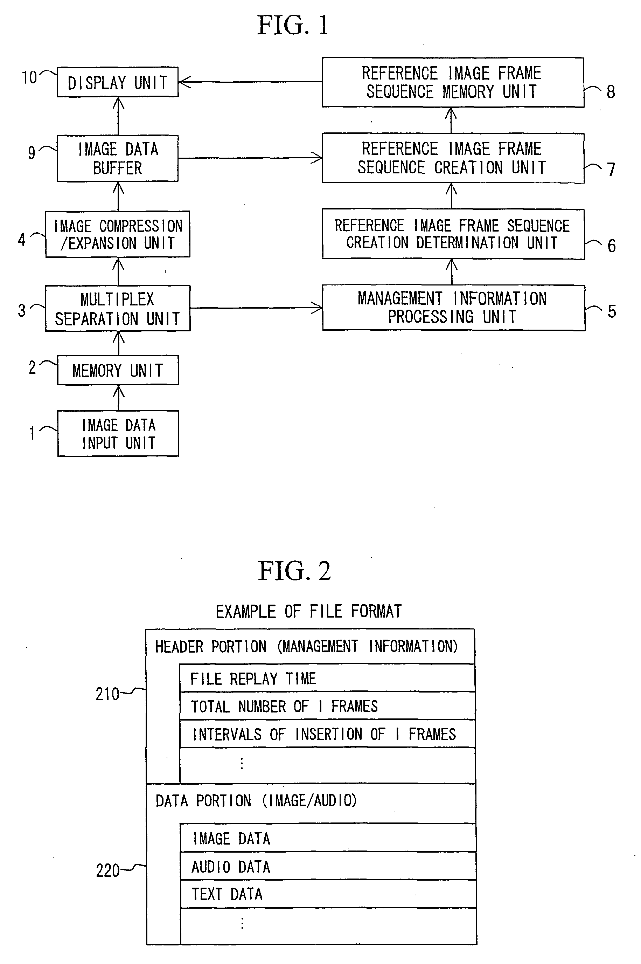

With reference to Fig. 1, an example of the configuration of a recording/replaying/editing device according to the invention will be described. The recording/replaying/editing device of the present example includes: an image data input unit 1 for entering image data from the outside in a wired or wireless manner; a memory unit 2 in which files of the image data entered via the image data input unit 1 are stored; a multiplex separation unit 3 for separating a data portion consisting of image, audio, or the like, from a management information portion in an image data file stored in the memory unit 2; an image compression/expansion unit 4 for decoding the image/audio data separated by the multiplex separation unit 3 into a data form such that the data can be displayed on a display unit; a management information processing unit 5 for acquiring the file management information separated by the multiplex separation unit 3; a reference image frame sequence creation determination unit 6 for determining whether or not a reference image frame sequence is to be created; a reference image frame sequence creation unit 7 for creating, if it is determined that a reference image frame sequence should be created, a reference image frame sequence consisting of I frames and additional image frames; a reference image frame sequence memory unit 8 for storing the reference image frame sequence; an image data buffer 9 for temporarily storing the image/audio data decoded by the image compression/expansion unit 4; and a display unit 10 for displaying an image.

The display unit 10 may be comprised of a CRT, an LCD monitor, or the like. The memory unit 2 may be comprised of a semiconductor memory, a hard disc, an optical disc, or the like. The reference image frame sequence memory unit 8 stores the reference image frame sequence in a compressed state. The method and mode of compression are not limited. Normally, the image data buffer 9 is included in the image compression/expansion unit 4. It is, however, described herein as a separate structure for the sake of explanation.

The recording/replaying/editing device of the present example further includes an operation unit operated by the user, a DCT conversion unit, an entropy coding unit, and a control unit for controlling individual units of the recording/replaying/editing device. However, these units are not described for the sake of simplicity. The recording/replaying/editing device of the present example may be a portable terminal such as a cell phone, or it may be a device other than a portable terminal.

In the present example, as the image data input unit 1 enters image data, a process for creating a reference image frame sequence is automatically started. If the total number of I frames in the file is smaller than a reference value, or if the intervals of insertion of I frame are larger than a reference value, the reference image frame sequence creation determination unit 6 determines that a reference image frame sequence should be created. When it is determined that a reference image frame sequence should be created, the insertion position of an image frame with respect to I frame sequence is calculated. The reference image frame sequence creation unit 7 creates a reference image frame sequence consisting of I frames and additional image frames by inserting the image frames with respect to I frame sequence. The reference image frame sequence is stored in the reference image frame sequence memory unit 8. While it is described herein that the image frame insertion position is calculated by the reference image frame sequence creation determination unit 6, the image frame insertion position may be calculated by the reference image frame sequence creation unit 7.

Thus, a reference image frame sequence is automatically prepared in the reference image frame sequence memory unit 8. When the user fast-forwards the image data or moves it backward, the reference image frame sequence stored in the reference image frame sequence memory unit 8 is displayed on the display unit 10.

Referring to Fig. 2, an example of the configuration of the image data file is described. The file includes a header portion 210 and a data portion 220. The header portion 210 includes management information such as the replaying time of the file, the total number of I frames, the insertion intervals of I frame, image size, presence or absence of audio, and codec information. The data portion 220 includes image/audio information such as image data, audio data, and text data.

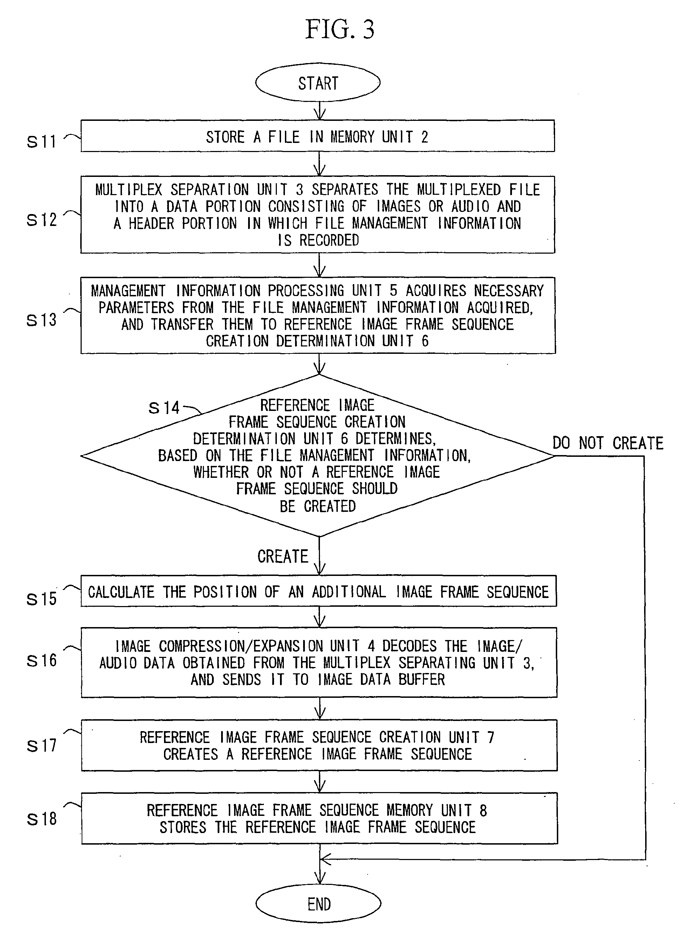

Referring to Fig. 3, the operation of the recording/replaying/editing device of the invention for creating the reference image frame sequence will be described. The recording/replaying/editing device is herein described as a portable terminal such as a cell phone. First, in step S11, the image data input unit 1 of the portable terminal acquires a file of multiplexed image data and stores it in the memory unit 2. Then, in step S12, the multiplex separation unit 3 separates the header portion 210 including a management information portion from the data portion 220 including image/audio data in the file stored in the memory unit 2. The data portion 220 is sent to the image compression/expansion unit 4, and the header portion 210 is sent to the management information processing unit 5.

In step S13, the management information processing unit 5 acquires the information about the file from the management information portion acquired from the multiplex separation unit 3, and then sends it to the reference image frame sequence creation determination unit 6.

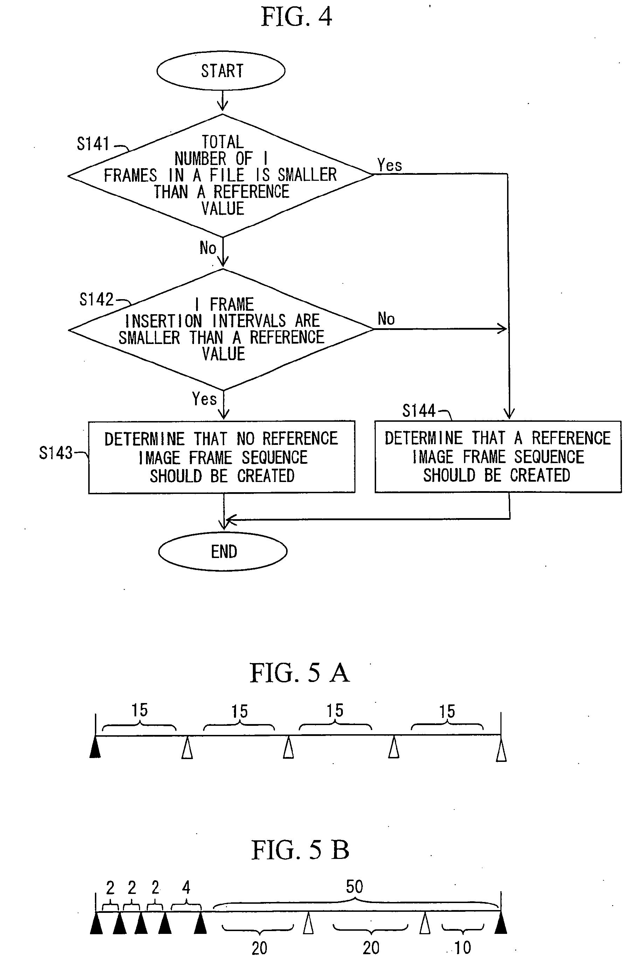

In step S 14, the reference image frame sequence creation determination unit 6 acquires the information about image and audio sent from the management information processing unit 5. It then determines whether or not a reference image frame sequence should be created. The details of step S14 will be described with reference to Fig. 4. If it is determined that a reference image frame sequence should be created, control proceeds to step S15. If it is determined that no reference image frame sequence should be created, the process is terminated.

In step S15, the position or time of additional image frames is calculated. As mentioned above, the process for calculating the position of the additional image frames is performed by the reference image frame sequence creation determination unit 6 or by the reference image frame sequence creation unit 7. In step S16, the image compression/expansion unit 4 decodes the image/audio data acquired from the multiplex separation unit 3 into data to be displayed on the display unit 10, and sends it to the image data buffer 9.

In step S17, the reference image frame sequence creation unit 7 creates a reference image frame sequence. First, an image frame sequence is obtained from the image data buffer 9, and then an additional image frame is created based on the position or time of the additional image frame. Then, the additional image frame is inserted in an I frame sequence obtained from the image data buffer 9. As a result, a reference image frame sequence is created. Further, a P frame is added to the reference image frame sequence consisting of I frames and the additional image frames, thereby creating a second reference image frame sequence.

In step S18, the reference image frame sequence memory unit 8 stores the thus created reference image frame sequence. In accordance with the recording/replaying/editing device of the present example, the image frames are additionally inserted even if the total number of I frames in the file is insufficient, or even if the insertion intervals of I frames are too large, thereby making it possible to designate a position for random accessing.

In the present example, as the portable terminal acquires an image file from the outside, a process for creating a reference image frame sequence is automatically started. Namely, the portable terminal, once it acquires an image file from the outside, assumes that the user will perform editing, fast-forwarding, or backwarding, and performs the process for creating a reference image frame sequence so as to facilitate such editing process.

Referring to Fig. 4, the details of the process for determining whether or not a reference image frame sequence should be created in step S141 are described. The reference image frame sequence creation determination unit 6 determines whether or not the total number of I frames in the file is smaller than a reference value. If the number of I frames in the file is smaller than the reference value, control proceeds to step S144. If the number of I frames in the file is not smaller than the reference value, control proceeds to step S142. For example, if the reference value for the number of I frame is five and the total number of I frames in the file is six, control proceeds to step S142. If the total number of I frames in the file is one, control proceeds to step S 144.

In step S142, it is determined whether or not the insertion intervals of I frames in the file are smaller than a reference value. If the insertion intervals of I frames are smaller than the reference value, control proceeds to step S143. If the insertion intervals of I frames are not smaller than the reference value, control proceeds to step S144. For example, even when the reference value for the number of I frames is five and the total number of I frames is six, the insertion interval of I frames may be larger than the reference value when the insertion intervals of I frames are not regular. In such a case, control proceeds to step S144. For example, when the reference number for the number of I frames is five and the total number of I frames is six, and when the insertion intervals of I frames are smaller than the reference value, control proceeds to step S143.

In step S143, it is determined that a reference image frame sequence should not be created. Namely, when the total number of I frames in the file is not smaller than the reference value, and when the insertion intervals of I frames are smaller than the reference value, it is determined that I frames are sufficient and so a reference image frame sequence should not be created. In step S144, it is determined that a reference image frame sequence should be created. Namely, when the total number of I frames in the file is smaller than the reference value, or when the insertion intervals of I frames are not smaller than the reference value, it is determined that I frames are insufficient and so it is determined that a reference image frame sequence should be created.

The reference value for the total number of I frames and the reference value for I frame intervals used in steps S141 and S142 may be automatically set by the portable terminal. Alternatively, they may be designated by the user. For example, when it is desired that the number of I frames and that of the additional image frames are greater than normal, the reference values may be changed. Thus, the reference values may be changed in accordance with the performance of the portable terminal to which the invention is applied or with resources, for example.

Referring to Fig. 5, specific examples of the processes in steps S14 and step S15 will be described. The symbol "▲" in the figures designates I frames, the symbol "Δ" designates additional image frames, and the numbers indicate time in seconds. It is herein assumed that the replaying time of a file is 60 seconds, that the reference value for the total number of I frames is five, and that the reference value for the frame intervals is 20 seconds.

The example shown in Fig. 5A is described. In the present example, there is only one I frame included at the head of the file. Therefore, the total number of I frames is less than 5, so that it is determined in step S14 that a reference image frame sequence should be created. In step S15, four image frames are added to I frame sequence, whereby the total number of I frame and the additional image frames becomes five, which is equal to the reference value. The positions of the four additional image frames are set such that each of the intervals at which the frames are inserted becomes smaller than the reference value. In the present example, five frames should be disposed at regular intervals.

The example shown in Fig. 5B is described, which includes six I frames in the file, so that the total number of I frames is greater than the reference value 5. However, the six I frames are not arranged at regular intervals. Five I frames are included in the first 10 seconds, while a single I frame is included at the end of the file. Thus, in the latter half of the file, the inserted intervals of I frames are 50 seconds, which is greater than the reference value of 20 seconds. Therefore, control proceeds to step S 15.

In step S15, two image frames are added. The positions of the two additional image frames are set such that each of the intervals at which the frames are inserted is equal to or smaller than the reference value. In the present example, in the latter half of the file, the inserted intervals of the frames are set to be 20 seconds and 10 seconds. In this way, each of the insertion intervals of the frames becomes equal to or smaller than the reference value.

The method for setting the inserted positions of the additional image frames is not limited to the foregoing examples. For example, the additional image frames may be inserted at intervals of 20 seconds, which is the reference value, starting from the beginning of the 50 second period. Alternatively, the 50 second period may be divided into equal intervals of less than 20 seconds. For example, if it is divided into three equal parts, additional image frames are inserted at intervals of 17 seconds. If it is divided into four equal parts, additional image frames are inserted at intervals of 12 seconds.

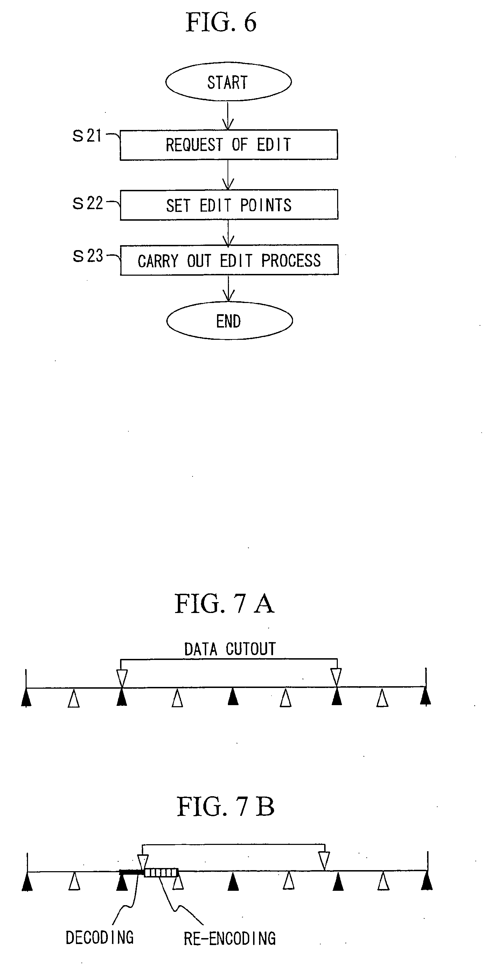

Referring to Fig. 6, the operation for editing a file using the recording/replaying/editing device of the invention will be described. It is assumed herein that the recording/replaying/editing device is a portable terminal, such as a cell phone. The editing operation is based on the premise that the processes for creating the reference image frame sequence shown in Figs. 3 and 4 have been completed, and that a reference image frame sequence consisting of I frames and additional image frames is stored in the reference image frame sequence memory unit 8, as shown in Fig. 5.

First, in step S21, the user selects the edit function during the replaying of a file. Specifically, the recording/replaying/editing device receives the entry of an edit request from the user. In step S22, the user selects the edit positions, namely, the start point and the end point of the edit operation. The user, in order to select such edit positions, performs fast-forwarding or backwarding. In the case of fast-forwarding, normally only I frames are displayed, as shown in Fig. 9B. However, in the present example, the reference image frame sequence stored in the reference image frame sequence memory unit 8 is displayed. Namely, the frame sequence consisting of I frames and additional image frames is displayed. In the case of backwarding, normally only I frames are displayed, as shown in Fig. 9C. However, in the present example, the reference image frame sequence stored in the reference image frame sequence memory unit 8 is displayed. Namely, the frame sequence consisting of I frames and additional image frames is displayed.

Thus, the user selects the edit positions while he or she monitors the frames displayed in the backwarding or fast-forwarding mode. The edit positions are selected in frame units. In step S23, the image editing/replaying device performs an edit process from the frame at the edit position selected by the user.

Referring to Fig. 7, an example of the edit process is described. The symbol "▲" designates I frames, the symbol "Δ" designates the additional image frames, and the inverted "Δ" designates the edit positions selected by the user. It is assumed herein that, as shown, the additional image frames have been added to I frames by the reference image frame sequence creating process.

Fig. 7A shows a case where the edit start point and the edit end point designated by the user correspond to an I frame or an additional image frame. In this case, no re-encoding is performed, and a data-cutting process is performed between the edit start and end points.

Fig. 7B shows a case where the edit start point and the edit end point designated by the user are both deviated from I frames and the additional image frames. In this case, decoding is performed from I frame or the additional image frame immediately before the edit start point to the edit start point (bold line in Fig. 7B), thereby obtaining an image frame at the edit start point. Then, re-encoding is performed from the image frame at the edit start point to the next I frame or additional image frame (vertically hatched portion in Fig. 7B). Thereafter, no re-encoding is performed up to the edit end point, and only data coupling is performed instead. In this way, the amount of re-encoding is reduced, so that the processing load can be decreased.

While the invention has been described by way of the foregoing examples, the invention is not limited to any of the examples. It will be understood to those skilled in the art that various changes can be made within the scope of the invention defined by the claims.

## Claims

1. A recording/replaying/editing device comprising:
an image data input unit for entering image data compressed by inter-frame prediction;
a reference image frame sequence creation determination unit for determining whether or not a reference image frame sequence should be created, based on the number of I frames included in each file in the image data or the intervals at which I frame are inserted; and
a reference image frame sequence creation unit for creating, if it is determined by the reference image frame sequence creation determination unit that a reference image frame sequence should be created, a reference image frame sequence consisting of I frames and additional image frames by adding image frames to I frames.

2. The recording/replaying/editing device according to claim 1, wherein the reference image frame sequence creation determination unit determines that a reference image frame sequence should be created if the number of I frames in each file is less than a predetermined reference value.

3. The recording/replaying/editing device according to claim 1, wherein the reference image frame sequence creation determination unit determines that a reference image frame sequence should be created if the intervals at which I frames are inserted in the file are not less than a predetermined reference value.

4. The recording/replaying/editing device according to claim 1, wherein the reference image frame sequence creation determination unit or the reference image frame sequence creation unit calculates the inserted positions of the additional image frames in I frame sequence if it is determined that a reference image frame sequence should be created.

5. The recording/replaying/editing device according to claim 1, comprising a reference image frame sequence memory unit for storing the reference image frame sequence created by the reference image frame sequence creation unit.

6. The recording/replaying/editing device according to claim 1, wherein, upon entry of an instruction for backwarding from the user, the reference image frame sequence created by the reference image frame sequence creation unit is displayed.

7. The recording/replaying/editing device according to claim 1, wherein, upon entry of an instruction for fast-forwarding from the user, the frame sequence created by the reference image frame sequence creation unit that consists of I frames and the additional image frames and to which further a P frame is added, is displayed.

8. The recording/replaying/editing device according to claim 1, wherein, upon entry of an edit start point and an edit end point from the user, a frame sequence between the edit start and end points is cut out if the edit start and end points correspond to either an I frame or an additional image frame of the reference image frame sequence created by the reference image frame sequence creation unit.

9. The recording/replaying/editing device according to claim 1, wherein, upon entry of an edit start point and an edit end point by the user, if the edit start point and end point do not correspond to an I frame or an additional image frame of the reference image frame sequence created by the reference image frame sequence creation unit, decoding is performed from an I frame or an additional image frame that is immediately before the edit start point to the edit end point, re-encoding is performed from the edit start point to an I frame or an additional image frame that is immediately after the edit start point, and no re-encoding is performed between an I frame or an additional image frame that is the end point for the re-encoding and the edit end point, and instead only data coupling is performed.

10. The recording/replaying/editing device according to claim 1, wherein the reference image frame sequence creation unit automatically carries out the operation for creating the reference image frame sequence upon entry of image data from the image data input unit even without an instruction from the user.

11. The recording/replaying/editing device comprising:
an image data input unit for entering image data from the outside;
a memory unit for storing a file of the image data entered via the image data input unit;
a multiplex separation unit for separating the management information portion from image/audio data portion in the image data file stored in the memory unit;
an image compression/expansion unit for decoding the image/audio data separated by the multiplex separation unit;
a management information processing unit for decoding the file management information separated by the multiplex separation unit;
a reference image frame sequence creation determination unit for determining whether or not a reference image frame sequence should be created;
a reference image frame sequence creation unit for creating a reference image frame sequence consisting of I frames and additional image frames by inserting image frames with respect to an I frame sequence;
a reference image frame sequence memory unit for storing the reference image frame sequence;
an image data buffer for temporarily storing the image/audio data decoded by the image compression/expansion unit; and
a display unit for displaying an image.

12. A recording/replaying/editing method comprising:
an image data input step for entering image data compressed by inter-frame prediction;
a storage step for storing a file of the image data;
a multiplex separation step for separating file management information from image/audio data in the stored image data image data file;
an image compression/expansion step for decoding the separated image/audio data;
a management information processing step for processing the separated file management information;
a reference image frame sequence creation determination step for determining, based on the result of the above processing step, whether or not a reference image frame sequence should be created; and
a reference image frame sequence creation step for creating, when it is determined in the image frame sequence creation determination step that a reference image frame sequence should be created, a reference image frame sequence consisting of I frames and additional image frames by inserting additional image frames with respect to I frames in each file.

13. The recording/replaying/editing method according to claim 12, wherein it is determined in the reference image frame sequence creation determination step that a reference image frame sequence should be created if the number of I frames in the file is smaller than a predetermined reference value.

14. The recording/replaying/editing method according to claim 12, wherein it is determined in the reference image frame sequence creation determination step that a reference image frame sequence should be created if the intervals at which I frames are inserted in the file are not smaller than a predetermined reference value.

15. A computer program for causing a computer to carry out the recording/replaying/editing method according to claims 12 to 14.

16. A recording medium in which the computer program according to claim 15 is recorded.
